# EUROPEAN PATENT SPECIFICATION

(11) **EP 4 268 964 B1**
(45) Date of publication and mention of the grant of the patent: **22.01.2025**
(21) Application number: 22170736.7
(22) Date of filing: 29.04.2022
(51) Int. Cl.: B04B 1/08, B04B 11/02, B04B 1/14, B04B 7/14

(54) **A CENTRIFUGAL SEPARATOR**
ZENTRIFUGALABSCHEIDER
SÉPARATEUR CENTRIFUGE

(43) Date of publication of application: 01.11.2023
(73) Proprietor: Alfa Laval Corporate AB, 221 00 Lund (SE)
(72) Inventor: NORD, Johan, SE-141 60 HUDDINGE (SE); EKSTRÖM, Anders, SE-187 67 TÄBY (SE); SATTARZADEH SHIRVAN, Sohrab, SE-117 63 STOCKHOLM (SE); JOHANSSON, Bengt, SE-147 71 GRÖDINGE (SE)
(74) Representative: Alfa Laval Attorneys

(56) References cited:
- EP-A1- 3 892 380
- WO-A1-2011/093784
- WO-A1-2021/058287
- US-A- 466 484

## Description

### Field of the Invention

The present invention relates to the field of centrifugal separators, and more a centrifugal separator for separating at least on liquid heavy phase from a liquid feed mixture.

### Background of the Invention

Centrifugal separators are generally used for separation of liquids and/or for separation of solids from a liquid. During operation, liquid mixture to be separated is introduced into a rotating bowl and heavy particles or denser liquid, usually water, accumulates at the periphery of the rotating bowl whereas less dense liquid accumulates closer to the central axis of rotation. This allows for collection of the separated fractions, e.g. by means of different outlets arranged at the periphery and close to the rotational axis, respectively.

In a centrifugal separator for clarification of beer, which has a sludge space where the separated heavy phase comprising yeast is collected, the yeast is usually ejected through discharges by intermittently opening outlets in the periphery of the separator bowl while the clarified beer is leaving the centrifugal separator through a liquid light phase outlet.

A centrifugal separator for clarification of beer is disclosed in WO2021058287, in which the yeast concentrate is flowing into a set of pipes from a position close to the periphery in the sludge space to a liquid heavy phase outlet. Such yeast cells leaving the centrifugal separator by the liquid heavy phase outlet have a high probability to survive the centrifugation and may be used for the next brewing batch, while much of the yeast cells that are ejected at the intermittent discharges are dead and are not usable in further fermentation. However, in such types of separators, there may be a problem of an uneven flow of yeast through the pipes. The object of the present invention is to improve the centrifugal separators in which the separated liquid heavy phase is collected with a set of pipes in the sludge space.

### Summary of the Invention

It is an object of the invention to at least partly overcome one or more limitations of the prior art. In particular, it is an object to provide a centrifugal separator having increased performance and that allows for efficient removal of a separated liquid heavy phase from the sludge space.

As a first aspect of the invention, there is provided a centrifugal separator for separating at least a liquid heavy phase from a liquid feed mixture, comprising
a frame, a drive member and a rotatable part,
wherein the drive member is configured to rotate the rotatable part in relation to the frame around an axis of rotation (X), and
wherein the rotatable part comprises a centrifuge bowl enclosing a separation space and a sludge space;
wherein the separation space comprises a stack of separation discs arranged coaxially around the axis of rotation (X) and wherein the sludge space is arranged radially outside the stack of separation discs;
wherein the centrifuge bowl further comprises an inlet for receiving the liquid feed mixture and
a first outlet chamber in fluid connection with a heavy phase outlet pipe for discharging a separated liquid heavy phase,
and wherein the centrifugal separator further comprises a plurality of outlet conduits for transport of the separated liquid heavy phase from the sludge space to the first outlet chamber; and wherein the plurality of outlet conduits have their inlet end portions extending into the sludge space;
characterised in that, the centrifugal separator further comprises fixation members for fixating the radial position of the inlet end portions in the sludge space a distance from the surrounding inner wall of the centrifuge bowl.

As used herein, the term "axially" denotes a direction which is parallel to the rotational axis (X). Accordingly, relative terms such as "above", "upper", "top", "below", "lower", and "bottom" refer to relative positions along the rotational axis (X). Correspondingly, the term "radially" denotes a direction extending radially from the rotational axis (X). A "radially inner position" thus refers to a position closer to the rotational axis (X) compared to "a radially outer position".

The plurality of outlet conduits may be arranged for continuous removal of a liquid heavy phase from the sludge space. Further, the plurality of outlet conduits may be arranged along the upper inner wall of the centrifuge bowl, but the inlet end portion however extends a distance from the inner wall of the centrifuge bowl. The fixation means are attached to these inlet end portions. The inlet of an outlet conduit for a separated liquid heavy phase is thus arranged at the inlet end portion. The plurality of outlet conduits may be equidistantly arranged around the axis of rotation (X).

The first aspect of the invention is based on the insight that the liquid heavy phase should be discharged a distance away from the inner wall of the centrifuge bowl in sludge space, and that it is important to fixate the outlet conduits at that position. This provides for a constant discharge of liquid heavy phase, and if the liquid heavy phase comprises yeast cells, also a high viability of the cell fraction. The position from which the liquid heavy phase is discharged may be a specific distance from the bowl wall and/or a specific distance from the axis of rotation (X). Thus, there may be a gap between the inlet end portions and the surrounding inner wall of the centrifuge bowl. The flow and heavy forces experienced in the sludge space can make the outlet conduits lose their original position, so the inventors have found that fixation of the outlet conduits in the sludge space provides for the liquid heavy phase removal in an even flow.

The centrifugal separator is for separation of a liquid feed mixture. The liquid feed mixture may be an aqueous liquid or an oily liquid. As an example, the centrifugal separator may be for separating a sludge phase and a liquid heavy phase and potentially also another liquid phase- a liquid light phase - from the liquid feed mixture. The liquid heavy phase has a density that is higher than the density of the light phase. The liquid mixture may for example be a liquid feed mixture comprising yeast cells used in a brewing process.

The frame of the centrifugal separator is a non-rotating part, and the rotatable part may be supported by the frame by at least one bearing device. The rotatable part of the separator may be arranged to be rotated around vertical axis of rotation, i.e. the axis of rotation (X) may extend vertically. The rotatable part comprises a centrifuge bowl. The centrifuge bowl is usually supported by a spindle, i.e. a rotatable shaft, and may thus be mounted to rotate with the spindle. Consequently, the rotatable part may comprise a spindle that is rotatable around the axis of rotation (X). The centrifugal separator may be arranged such that the centrifuge bowl is supported by the spindle at one of its ends, such at the bottom end or the top end of the spindle.

The drive member for rotating the rotatable part of the separator may comprise an electrical motor having a rotor and a stator. The rotor may be fixedly connected to the rotatable part, such as to a spindle. Alternatively, the drive member may be provided beside the spindle and rotate the rotatable part by a suitable transmission, such as a belt or a gear transmission.

The centrifuge bowl encloses by its walls a separation space and a sludge space. The separation space, in which the separation of the liquid feed mixture takes place, comprises a stack of separation discs. The separation discs may e.g. be of metal. Further, the separation discs may be frustoconical separation discs, i.e. having separation surfaces forming frustoconical portions of the separation discs. Radially outside of the stack of separation discs is the sludge space, in which separated sludge and liquid heavy phase is collected during operation. The sludge space thus extends radially from the outer portion of the stack of separation discs to the inner wall of the centrifuge bowl.

The separation discs are arranged coaxially around the axis of rotation (X) at a distance from each other to form passages between each two adjacent separation discs. The stack of separation discs thus forms a surface enlarging insert that increases the separation efficiency as liquid mixture flows in the passages of the stack. In embodiments of the first aspect, the stack of separation discs comprises more than 200 separation discs. For example, the stack of separation discs may have a diameter that is more than 300 mm and a thickness that is less than 0.40 mm, such as less than 0.30 mm.

The centrifugal separator also comprises an inlet for receiving the liquid mixture to be separated (the liquid feed mixture). This inlet may be arranged centrally in the centrifuge bowl, thus at rotational axis (X). The centrifugal separator may be arranged to be fed from the bottom, such as through a spindle, so that the liquid feed mixture is delivered to the inlet from the bottom of the separator. Alternatively, the centrifugal separator may be arranged to be fed from the top, through a stationary inlet pipe extending into the centrifuge bowl to the inlet.

Further, the centrifugal separator comprises outlets for the separated phases. The centrifuge bowl comprises a first outlet chamber which is in fluid connection with a heavy phase outlet pipe for discharging a separated liquid heavy phase. The outlet pipe is thus a stationary outlet pipe. In analogy, if also a liquid light phase is to be separated, the centrifuge bowl may comprise a second outlet chamber which is in fluid connection with a light phase outlet pipe for discharge of a separated liquid light phase. Also such outlet pipe is a stationary outlet pipe. Thus, in embodiments of the first aspect, the centrifugal separator is further comprising a light phase outlet pipe for discharging a separated liquid light phase.

The first and second outlet chambers may be arranged on the upper portion of the centrifuge bowl.

The outlet chamber or chambers may be sealed to the liquid outlet pipes by means of e.g. a mechanical seal or a liquid seal. The seal may be a hermetic seal, such as a mechanical hermetic seal, used when the material to be separated in the centrifugal separator must not be exposed to or come in contact with the atmosphere. Thus, a hermetic seal reduces the risk of any substance, such as oxygen, or particle in the atmosphere from contaminating the liquid feed or a separated phase. With a mechanical hermetic seal, there are no air-pockets during operation and control of the liquid interface position in the centrifuge bowl may be achieved by altering the backpressures/flow rate of the liquid phases. This may be performed by one mechanical seal arranged at the top of the centrifuge bowl. The mechanical seal may be a double mechanical seal, i.e. comprising a rotatable portion and a stationary portion forming the sealing interface therebetween.

Also the inlet may be sealed by a hermetic seal, such as a mechanical hermetic seal.

Further, the centrifugal separator may comprise a sludge outlet for a separated sludge phase. The sludge phase comprises a solids fraction. In embodiments of the first aspect, the sludge outlet is in the form of a set of intermittently openable outlets arranged at the periphery of the centrifuge bowl. The intermittently openable outlets may be equidistantly spaced around the axis of rotation (X). As an alternative, the sludge outlets may be nozzles arranged for continuous discharge of a separated sludge phase.

Consequently, in embodiments of the first aspect, the centrifugal separator is comprising sludge outlets at the periphery of the centrifuge bowl. The sludge outlets may be in the form of a set of intermittently openable outlets.

In embodiments of the first aspect, the plurality of outlet conduits are formed as pipes at their inlet end portions. Further, the plurality of outlet conduits may be formed as a plurality of pipes extending all the way to the first outlet chamber. The outlet conduits may be arranged above the disc stack, such as above a top disc arranged over the disc stack. Such top disc may be thicker than the separation discs of the disc stack. The top disc may also be used in the axial compression of the disc stack within the centrifuge bowl Further, the plurality of pipes may extend along the upper inner wall of the centrifuge bowl and have their inlet end portions extending a distance from the surrounding inner wall of the centrifuge bowl in the sludge space.

In embodiments of the first aspect, the sludge space has a radial distance of R_{sludge}, and the plurality of outlet conduits are arranged such that the inlet end portions are arranged at a radial position from the surrounding inner wall of the centrifuge bowl which is between 0.2-0.8 R_{sludge}. As an example, the plurality of outlet conduits may be arranged such that the inlet end portions are arranged at a radial position from the surrounding inner wall of the centrifuge bowl which is between 0.4-0.6 R_{sludge}, thus substantially in the middle between the inner end wall and the stack of separation discs.

In embodiments of the first aspect, the fixation means are fastened to the surrounding inner wall of the centrifuge bowl in the sludge space.

Thus, the fixation means may be an annular ring member arranged around the inner wall of the centrifuge bowl in the sludge space. Such annular member may have through holes for each pipe.

As an example, the fixation means may comprise individual fixation members for at least one, such as all of the plurality of outlet conduits. Such individual members may thus be fastened to the inner wall of the centrifuge bowl in the sludge space. Such fixation members may comprise screws, hooks or loops that are secured to the inner wall. It may be an advantage to use individual fixation members since it may disturb the flow in the sludge space to a lesser degree during operation.

In embodiments of the first aspect, the fixation means are attached to, or forms part of, a disc of the stack of separation discs.

Such fixation means may be a part of the outer circumference of the disc in the disc stack. Thus, fixation means attached to, or forming part of, a disc of the disc stack may extend further in the radial direction than the outer circumference of the other discs of the disc sack.

Fixation means fastened to, or forming part of, a separation disc may be realised using a separation disc having a brim portion, i.e. a portion that extends further out in the radial direction than the other discs of the stack. As mentioned above, the separation discs may be frustoconical, and such a brim portion may extend in the same direction as the conical portion of the frustoconical disc. The brim portion may however also extend in another direction than the direction of the conical portion, such as in the radial direction.

As an example, the fixation means may be formed as through holes in a brim portion of a disc of the stack of separation discs.

As further example, the fixation means may be formed as individual fixation members for at least one, such as all, of the plurality of outlet conduits.

As mentioned above, having individual fixation members for each outlet conduit pipe may interfere less with the flow in the sludge space during operation. A separation disc having individual fixation members may thus have the same radius as the rest of the separation discs at the portions of the disc except for the individual fixation members protruding from the outer circumference of the disc.

As an example, the individual fixation members may be formed as a loops attached to the outer circumference of a disc of the stack of separation discs.

The loops may thus be realised by having a protruding member from the separation disc comprising a through hole. The individual fixation members may also be in the form of hooks

As an example, the separation discs may be frustoconical separation discs and the individual fixation members may have an axial thickness that is larger than the thickness of the conical portion of the frustoconical separation discs. Having such a "thicker" fixation member may increase the strength of the fixation member.

As a second aspect of the invention, there is provided a method of separating at a liquid heavy phase from a liquid feed mixture, comprising the steps of
a) introducing the liquid feed mixture into a centrifugal separator according to the first aspect, and
b) discharging a separated liquid heavy phase from the centrifugal separator.

This aspect may generally present the same or corresponding advantages as the former aspect. Effects and features of this second aspect are largely analogous to those described above in connection with the first aspect. Embodiments mentioned in relation to the first aspect are largely compatible with the second aspect of the invention.

As discussed in relation to the first aspect above, the liquid feed mixture may comprise solids that are separated into a sludge phase. Consequently, in embodiments of the second aspect, the method further comprises the step of:
c) discharging a separated sludge phase from the centrifugal separator.

Such a step c) may comprise intermittently ejecting the separated solids phase through a set of intermittently openable outlets.

Further, if more than one liquid phase is separated in the centrifugal separator, the method also comprises a step of:
d) discharging a separated liquid light phase from the centrifugal separator

The inventive concept disclosed herein may be used when separating a variety of different feed mixtures. Especially, the inventive concept may be used when separation a liquid feed mixture comprising yeast, since the yeast may be discharged more gently, i.e. with a higher survival rate, via the plurality of outlet conduits in the liquid heavy phase. Thus, in embodiments, the liquid feed mixture comprises yeast that are discharged in the discharged liquid heavy phase.

The method may thus be used in different stages of the brewing process.

### Brief description of the Drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.
Figure 1 shows a schematic drawing of a centrifugal separator.
Figure 2 shows a schematic drawing of an example of a centrifuge bowl which forms part of a centrifugal separator.
Figures 3a and 3b shows examples of fixation members used for fixating the outlet conduits.
Figure 4 shows a perspective view of a separation disc.
Figure 5a and 5b show a separation disc with the fixation means in a brim portion.
Figure 6a and 6b show a separation disc having individual fixation members in the form of loops attached to the outer periphery.
Figure 7 illustrates a method of separating at least a liquid heavy phase from a liquid feed mixture.

### Detailed Description

The centrifugal separator and the method according to the present disclosure will be further illustrated by the following description with reference to the accompanying drawings.

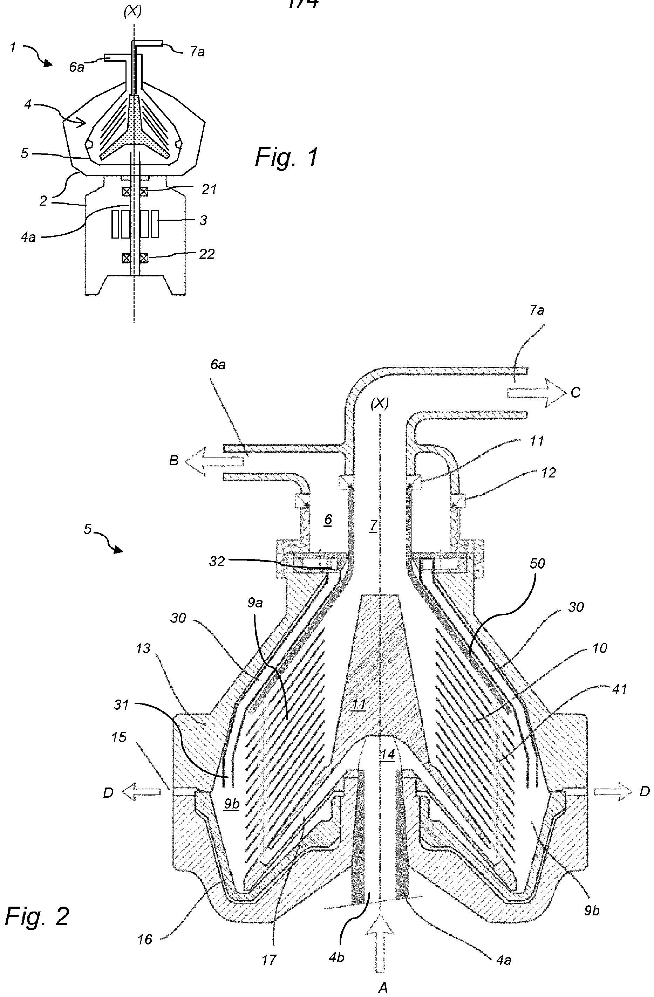

Figs.1 and 2 schematically show a centrifugal separator and the centrifuge bowl of the centrifugal separator of the present disclosure.

Fig. 1 show a cross-section of an embodiment of a centrifugal separator 1 configured to separate a heavy phase and a light phase from a liquid feed mixture. The centrifugal separator 1 has a rotatable part 4, comprising the centrifuge bowl 5 and drive spindle 4a.

The centrifugal separator 1 is further provided with a drive motor 3. This motor 3 may for example comprise a stationary element and a rotatable element, which rotatable element surrounds and is connected to the spindle 4a such that it transmits driving torque to the spindle 4a and hence to the centrifuge bowl 5 during operation. The drive motor 3 may be an electric motor. Alternatively, the drive motor 3 may be connected to the spindle 4a by transmission means such as a drive belt or the like, and the drive motor may alternatively be connected directly to the spindle 4a.

The centrifuge bowl 5, shown in more detail in Fig. 2, is supported by the spindle 4a, which is rotatably arranged in a frame 2 around the vertical axis of rotation (X) in a bottom bearing 22 and a top bearing 21. The stationary frame 2 surrounds centrifuge bowl 5.

In the centrifugal separator as shown in Fig. 1, liquid feed mixture to be separated is fed to the bottom to the centrifuge bowl 5 via the drive spindle 4a. The drive spindle 4a is thus in this embodiment a hollow spindle, through which the feed is supplied to the centrifuge bowl 5. However, in other embodiments, the liquid feed mixture to be separated is supplied from the top, such as through a stationary inlet pipe extending into the centrifuge bowl 5.

After separation has taken place within the centrifuge bowl 5, separated liquid heavy phase is discharged through stationary outlet pipe 6a, whereas separated liquid light phase is discharged through stationary outlet pipe 7a.

Fig. 2. shows a more detailed view of the centrifuge bowl 5 of the centrifugal separator 1.

The centrifuge bowl 5 forms within itself a separation space 9a and a sludge space 9b, located radially outside the separation space 9a. In the separation space 9a, a stack 10 of separation discs 40 is arranged coaxially around the axis of rotation (X) and axially below a top disc 50. The stack 10 is arranged to rotate together with the centrifuge bowl 5 and provides for an efficient separation of the liquid feed mixture into at least a liquid light phase and a liquid heavy phase. Thus, in the separation space 9a, the centrifugal separation of the liquid feed mixture takes place during operation. The sludge space 9b is in this embodiment confined between an inner surface of the centrifuge bowl 5 and an axially movable operating slide 16.

The disc stack 10 is supported at its axially lowermost portion by distributor 11. The distributor 11 comprises an annular conical base portion arranged to conduct liquid mixture from the center inlet 14 of the centrifuge bowl 5 to a predetermined radial level in the separation space 9a, and a central neck portion extending upwards from the base portion.

The centrifuge bowl 5 further comprises an inlet 14 in the form of a central inlet chamber formed within or under the distributor 11. The inlet 14 is arranged for receiving the liquid feed mixture and is thus in fluid communication with the hollow interior 4b of the spindle 4a, through which the liquid feed is supplied to the centrifuge bowl 5.

The inlet 14 communicates with the separation space 9a via passages 17 formed in the base portion of the distributor 11. The passages 17 may be arranged so that liquid mixture is transported to a radial level that corresponds to the radial level of the cut-outs 41 provided in the separation discs 40. The cut-outs 41 form axial channels within the disc stack and distributes the liquid feed mixture throughput the disc stack 10.

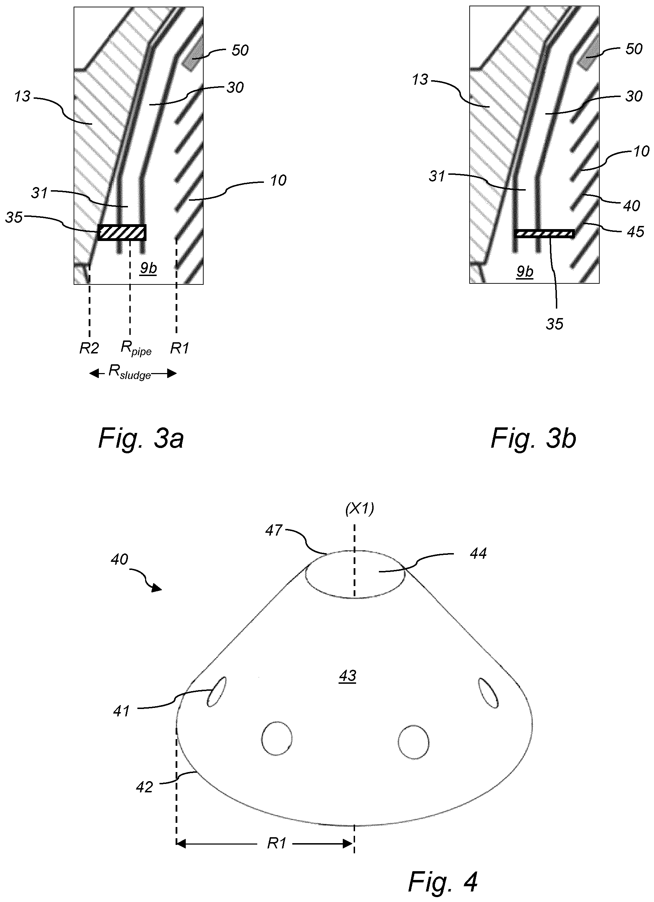

There is a number of outlet conduits 30 in the form of channels for transporting separated liquid heavy phase from the sludge space 9b to a first outlet chamber 6. In Fig. 2 the outlet conduits 30 are executed as pipes having their inlet end portions 31 stretching out in the sludge space 9b to a diameter larger than the disc stack diameter. When clarifying beer, the heavy phase flowing in the outlet conduits 30 is yeast concentrate. The plurality of outlet conduits 30 have their inlet end portions 31 extending into the sludge space 9b and there are fixation members 35 for fixating the radial position of the inlet end portions 31 in the sludge space. These fixation members are discussed in more detail relation to Figs. 3-6 below. Due to the fixation members, the position of the inlet end portions 31 are a distance from the surrounding inner wall 13 of the of the centrifuge bowl 5. Thus, the inlet end portions 31 are arranged so that there is a gap between the inlet end portions 31 and the surrounding wall 13, i.e. there is a free space for liquids or solids radially outside of the inlet end portions 31. The inlet end portions 31 are in the form of separate pipes. Also the portion of the pipes 30 extending along the inner wall of the centrifuge bowl 13 are in the form of pipes. These portion, i.e. the portions of the conduits 30 not being the inlet end portions 31, could however also be in the form of channels integrated in the wall 13 of the centrifuge bowl 15.

The outlet conduits 30 extend from a radially outer position of the sludge space 9b to the first outlet chamber 6. The outlet conduits 30 consequently have their inlet end portions 31 arranged at the radially outer position and a conduit outlet 32 arranged at a radially inner position. The outlet conduit are arranged axially over the top disc 50. Further, the outlet conduits 30 are arranged with an upward tilt relative the radial plane from the inlet end portions 31 to the conduit outlet 32. Further, there may be vortex nozzles arranged at the outlet end portions 32 for providing a stable flow, as discussed in WO2021058287A1.

In embodiments, the centrifugal separator comprises at least four outlet conduits 30, such as at least 8 outlet pipes 30, such as at least twelve outlet conduits 30.

The radially inner portion of the disc stack 10 communicates with a second outlet chamber 7 for a separated light phase of the liquid feed mixture. The second outlet chamber 7 7 of the centrifuge bowl 5 communicates with a stationary outlet pipe 7a for discharging the separated liquid light phase from the centrifuge bowl 5.

The first and second outlet chambers 6, 7 have mechanical seals 12, 11. As this is an airtight design, they are also often called hermetic seals. The inlet channel 4b is also sealed at lower end of the hollow spindle 4a, thus preventing communication between the inlet channel 4b and the surroundings. This mechanical seal is not shown in this figure.

The centrifuge bowl 5 is further provided with outlets 15 at the radially outer periphery of the sludge space 9b. These outlets 15 are evenly distributed around the rotor axis (X) and are arranged for intermittent discharge of a sludge component of the liquid feed mixture. The sludge component comprises denser particles forming a sludge phase. The opening of the outlets 15 is controlled by means of an operating slide 16 actuated by operating water channels below the operating slide 16, as known in the art. In its position shown in the drawing, the operating slide 16 abuts sealingly at its periphery against the upper part of the centrifuge bowl 5, thereby closing the sludge space 9b from connection with outlets 15, which are extending through the centrifuge bowl 5.

During operation of the separator as shown in Fig. 1 and 2, the centrifuge bowl 5 is brought into rotation by the drive motor 3. Via the spindle 4a, liquid feed mixture to be separated is brought into the separation space 9a, as indicated by arrow "A". Depending on the density, different phases in the liquid feed mixture is separated between the separation discs 40 of the stack 10. Heavier component, such as a liquid heavy phase and a sludge phase, move radially outwards between the separation discs of the stack 10 to the sludge space 9b, whereas the phase of lowest density, such as a liquid light phase, moves radially inwards between the separation discs of the stack 10 and is forced through the outlet pipe 7a via the second outlet chamber 7, as indicated by arrow "C". The liquid of higher density is instead discharged via the outlet conduits 30 to the first outlet chamber 6 and further out via stationary outlet pipe 6a, as indicated by arrow "B". Thus, during separation, an interphase between the liquid of lower density and the liquid of higher density is formed in the centrifuge bowl 5, such as radially within the stack of separation discs. Solids, or sludge, accumulate at the periphery of the sludge space 9b and is emptied intermittently from within the centrifuge bowl by the sludge outlets 15 being opened, whereupon sludge and a certain amount of fluid is discharged from the separation chamber 15 by means of centrifugal force, as indicated by arrow "D". However, the discharge of sludge may also take place continuously, in which case the sludge outlets 17 take the form of open nozzles and a certain flow of sludge and/or heavy phase is discharged continuously by means of centrifugal force.

Fig. 3a shows a close-up view of the upper portion of the sludge space 9b of the centrifuge bowl 5. The outlet conduits 30 extend over the top disc 50 along the surrounding inner wall 13 of the centrifuge bowl 5 but is arranged such that their inlet end portions 31 are distanced from the surrounding inner wall within at least a portion of the sludge space 9b. In Fig. 3a, there is a fixation means 35 fastened to the surrounding inner wall 13 in the sludge space 9b for fixating the radial position of the inlet end portions 31 within the sludge space 9b. The fixation means 35 is fastened to the inner wall axially within the extension of the sludge space 9b. In this example, the fixation means takes the form of an annular ring member with a number of through holes, one for each outlet conduit 30 so that the inlet end portion 31 extends axially through the through hole. However, the fixation means could also be a number of individual fixation members, such as one for each inlet end portion 31 of an outlet conduit 30. As illustrated in Fig. 3a, the stack 10 of separation discs has its outer edge at radial position R1 and the surrounding inner wall has its radially outermost position at radial position R2, i.e. the sludge space has a radial extension of R_{sludge} = R2-R1. The inlet end portions 31 are arranged at position Rₚᵢₚₑ that is between R1 and R2, e.g. such that the inlet end portions 31 are arranged at a position from the surrounding inner wall of the centrifuge bowl which is between 0.2-0.8 R_{sludge}.

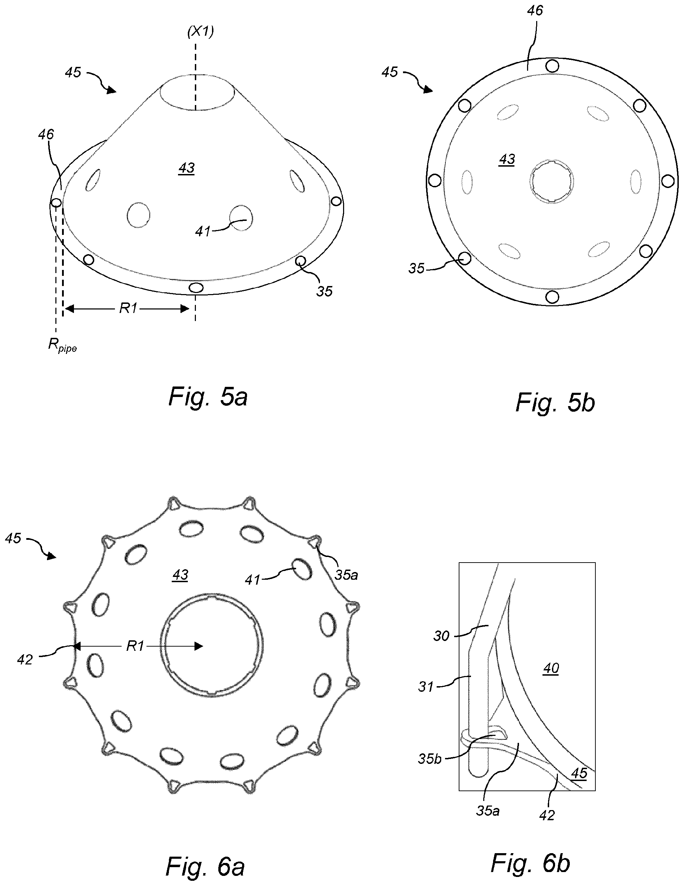

The fixation means could also be attached to one or several of the separation discs 40 of the disc stack 10. This is illustrated in Fig. 3b, in which there is a fixation means 35 that is attached to, or forms part of, one of the discs 45 of the stack 10 of separation discs. Such embodiments will be discussed further in relation to Figs. 5a, 5b, 6a and 6b below.

Fig. 4 shows a perspective view of a separation disc 40 of the disc stack to which no fixation means is attached. Separation disc 40 is thus a common disc used in a separator for separating a liquid mixture comprising yeast. The separation disc 40 has a truncated conical shape, i.e. a frusto-conical shape, along conical axis X1. The separation disc 40 has an inner surface 44 and an outer surface 43, extending radially from an inner periphery 47 to an outer periphery 42. The outer periphery is thus arranged at radius R1 in the centrifuge bowl 5. In this embodiment, the separation disc is also provided with a number of through holes 41, located at a radial distance from both the inner and outer peripheries. When forming a stack with other separation discs of the same kind, through holes 41 form axial distribution channels for an even distribution of the liquid mixture throughout the stack of separation discs. The separation disc further comprises a plurality of spacing members (not shown) to provide interspaces between mutually adjacent separation discs in a stack of separation discs. The spacing members may be located on the inner 44 or the outer 43 surface and may be in the form of elongated strips or as spot-formed spacing members.

Figs. 5a and 5b show an embodiment in which the fixation means 35 forms part of a separation disc 45. Fig. 5a shows a perspective view and Fig. 5b shows a top view of the separation disc 45. The disc 45 is a separation disc as shown in Fig. 4 but having an additional brim portion 46 formed radially outside the radius R1. Compared to Fig. 4, the brim portion 46 is formed radially outside the outer periphery 42. The brim portion 46 may be ring shaped and the surface of the brim portion may be smooth and formed as a continuous sheet of material circumventing the separation surface. The brim portion 46 has an inclination to the radial direction which is different from the inclination of the conical portion 43. In the example shown in Figs. 5a and 5b, the brim portion 46 extends substantially in the radial plane. However, the brim portion 46 could also be formed with the same inclination as the conical surface 43 of the separation disc. The fixation members 35 are in the form of through holes in this brim portion 46, in this example one through hole per outlet conduit. The radial extent of the brim portion 46 is such that when the disc 45 is placed within the stack 10 of separation discs, the through holes 35 are at the radial position to position the inlet end portions 31 of the outlet conduits at position Rₚᵢₚₑ.

Figs. 6a and 6b show another embodiment in which the fixation means 35 forms part of a separation disc 45. Fig. 6a is a top view of a separation disc 45 in which the fixation means 35 is formed as individual fixation members 35a for all of the outlet conduits 30. The individual fixation members 35a are formed as loops that are attached to the outer circumference 42 of the disc. Thus, the loops 35a extend from outside radius R1 when the disc 45 is arranged in the disc stack to position the inlet end portions 31 of the outlet conduits at position Rₚᵢₚₑ. The separation disc 45 has a radius R1, i.e. the same outer radius as the rest of the discs in the disc stack 10, in between the loops 35.

Fig. 6b, shows a perspective view of the disc 45 being arranged within the rest of the discs 40 of the stack 10. The inlet end portion 31 of the outlet conduit 30 is guided in the through hole 35b of the loop 35a. As also illustrated in Fig 6b, the axial thickness of the loop 35a is larger than the axial thickness of the conical portion of the frustoconical separation discs 40 and the conical portion of the separation disc 45 onto which the loops 35a are attached. This aids in increasing the stability of the loops 35a.

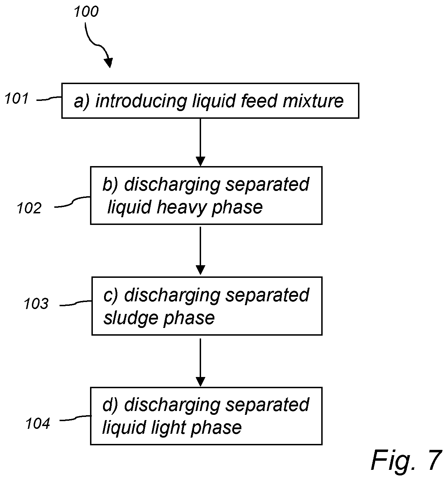

Fig. 7 illustrates a method 100 of least a liquid heavy phase from a liquid feed mixture. The method 100 comprises the steps of
a) introducing 101 the liquid feed mixture into a centrifugal separator 1. This separator may thus be a centrifugal separator as disclosed herein above, such as the centrifugal separator discussed in relation to Figs. 1-2.

The method 100 further comprises a step b) of discharging 102 a separated liquid heavy phase from the centrifugal separator. The liquid heavy phase may be discharged continuously.

The method may further comprise a step c) of discharging 103 a separated sludge phase from the centrifugal separator and a step d) of discharging 104 a separated liquid light phase from the centrifugal separator 1. The liquid light phase has thus a density that is lower than the density of the liquid heavy phase

Step c) of discharging 103 a separated sludge phase may comprise intermittently ejecting the separated solids phase through a set of intermittently openable outlets.

The liquid feed mixture may for example be a liquid feed mixture comprising yeast. The yeast may thus be discharged as the separated liquid heavy phase.

The invention is not limited to the embodiment disclosed but may be varied and modified within the scope of the claims set out below. The invention is not limited to the orientation of the axis of rotation (X) disclosed in the figures. The term "centrifugal separator" also comprises centrifugal separators with a substantially horizontally oriented axis of rotation. In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A centrifugal separator (1) for separating at least a liquid heavy phase from a liquid feed mixture, comprising
a frame (2), a drive member (3) and a rotatable part (4),
wherein the drive member (3) is configured to rotate the rotatable part (4) in relation to the frame (2) around an axis of rotation (X), and
wherein the rotatable part (4) comprises a centrifuge bowl (5) enclosing a separation space (9a) and a sludge space (9b);
wherein the separation space (9a) comprises a stack (10) of separation discs (40) arranged coaxially around the axis of rotation (X) and wherein said sludge space (9b) is arranged radially outside said stack (10) of separation discs (40);
wherein the centrifuge bowl (5) further comprises an inlet (14) for receiving the liquid feed mixture and
a first outlet chamber (6) in fluid connection with a heavy phase outlet pipe (6a) for discharging a separated liquid heavy phase,
and wherein the centrifugal separator (1) further comprises
a plurality of outlet conduits (30) for transport of said separated liquid heavy phase from said sludge space (9b) to said first outlet chamber (6); and wherein the plurality of outlet conduits (30) have their inlet end portions (31) extending into said sludge space (9b) and
**characterized in that**
the centrifugal separator (1) further comprises fixation members (35) for fixating the radial position of the inlet end portions (31) in the sludge space (9b) a distance from the surrounding inner wall (13) of the centrifuge bowl (5).

2. A centrifugal separator (1) according to claim 1, wherein the plurality of outlet conduits (30) are formed as pipes at their inlet end portions (31).

3. A centrifugal separator (1) according to claim 1 or 2, wherein the sludge space (9b) has a radial distance of R_{sludge}, and the plurality of outlet conduits (30) are arranged such that the inlet end portions (31) are arranged at a radial position from the surrounding inner wall of the centrifuge bowl which is between 0.2-0.8 R_{sludge}.

4. A centrifugal separator (1) according to any previous claim, wherein said fixation means (35) are fastened to the surrounding inner wall (13) of the centrifuge bowl (5) in the sludge space (9b).

5. A centrifugal separator (1) according to claim 4, wherein said fixation means (35) comprise individual fixation members for at least one, such as all, of said plurality of outlet conduits (30).

6. A centrifugal separator (1) according to any one of claims 1-3, wherein the fixation means (35) are attached to, or forms part of, a disc (45) of the stack (10) of separation discs.

7. A centrifugal separator (1) according to claim 6, wherein the fixation means (35) are formed as through holes in a brim portion (46) of a disc (45) of the stack (10) of separation discs.

8. A centrifugal separator (1) according to claim 6, wherein the fixation means (35) are formed as individual fixation members (35a) for at least one, such as all, of the plurality of outlet conduits (30).

9. A centrifugal separator (1) according to claim 8, wherein the individual fixation members (35a) are formed as loops attached to the outer circumference of a disc (45) of the stack (10) of separation discs (40).

10. A centrifugal separator (1) according to claim 9, wherein the separation discs (40) are frustoconical separation discs and wherein the individual fixation members (35a) have an axial thickness that is larger than the thickness of the conical portion of the frustoconical separation discs (40).

11. A centrifugal separator (1) according to any previous claim, further comprising sludge outlets (15) at the periphery of the centrifuge bowl (5).

12. A centrifugal separator (1) according to claim 11, wherein the sludge outlets (15) are in the form of a set of intermittently openable outlets.

13. A centrifugal separator (1) according to any previous claim, further comprising a light phase outlet pipe (7a) for discharging a separated liquid light phase.

14. A method (100) of separating at least a liquid heavy phase from a liquid feed mixture, comprising the steps of
a) introducing (101) the liquid feed mixture into a centrifugal separator (1) according to any one of claims 1-13; and
b) discharging (102) a separated liquid heavy phase from said centrifugal separator (1).

15. A method (100) according to claim 14, wherein the liquid feed mixture comprises yeast that are discharged in the discharged liquid heavy phase.

## Patentansprüche

1. Zentrifugalabscheider (1) zum Abscheiden mindestens einer flüssigen schweren Phase aus einem flüssigen Zulaufgemisch, der Folgendes umfasst:
einen Rahmen (2), ein Antriebselement (3) und einen drehbaren Teil (4),
wobei das Antriebselement (3) zum Drehen des drehbaren Teils (4) in Bezug auf den Rahmen (2) um eine Drehachse (X) konfiguriert ist, und
wobei der drehbare Teil (4) eine Zentrifugentrommel (5) umfasst, die einen Abscheidungsraum (9a) und einen Schlammraum (9b) umschließt;
wobei der Abscheidungsraum (9a) einen Stapel (10) von Abscheidungsscheiben (40) umfasst, die koaxial um die Drehachse (X) angeordnet sind, und wobei der Schlammraum (9b) radial außerhalb des Stapels (10) von Abscheidungsscheiben (40) angeordnet ist;
wobei die Zentrifugentrommel (5) ferner einen Einlass (14) zur Aufnahme des flüssigen Zulaufgemischs umfasst und
eine erste Auslasskammer (6) in Fluidverbindung mit einem Schwerphasenauslassrohr (6a) zum Ablassen einer abgeschiedenen flüssigen schweren Phase,
und wobei der Zentrifugalabscheider (1) ferner Folgendes umfasst:
eine Vielzahl von Auslassleitungen (30) für den Transport der abgeschiedenen flüssigen schweren Phase aus dem Schlammraum (9b) zur ersten Auslasskammer (6); und wobei die Einlassendabschnitte (31) der Vielzahl von Auslassleitungen (30) sich in den Schlammraum (9b) erstrecken, und
**dadurch gekennzeichnet, dass**
der Zentrifugalabscheider (1) ferner Befestigungselemente (35) zum Befestigen der radialen Position der Einlassendabschnitte (31) im Schlammraum (9b) in einem Abstand von der umgebenden Innenwand (13) der Zentrifugentrommel (5) umfasst.

2. Zentrifugalabscheider (1) nach Anspruch 1, wobei die Vielzahl von Auslassleitungen (30) an ihren Einlassendabschnitten (31) als Rohre ausgebildet sind.

3. Zentrifugalabscheider (1) nach Anspruch 1 oder 2, wobei der Schlammraum (9b) einen radialen Abstand R_{sludge} aufweist und die Vielzahl von Auslassleitungen (30) so angeordnet sind, dass die Einlassendabschnitte (31) an einer radialen Position von der umgebenden Innenwand der Zentrifugentrommel angeordnet sind, die zwischen 0,2 und 0,8 R_{sludge} liegt.

4. Zentrifugalabscheider (1) nach einem vorhergehenden Anspruch, wobei die Befestigungsmittel (35) an der umgebenden Innenwand (13) der Zentrifugentrommel (5) im Schlammraum (9b) fixiert sind.

5. Zentrifugalabscheider (1) nach Anspruch 4, wobei das Befestigungsmittel (35) einzelne Befestigungselemente für mindestens eine, wie z.B. alle, der Vielzahl von Auslassleitungen (30) umfasst.

6. Zentrifugalabscheider (1) nach einem der Ansprüche 1 bis 3, wobei die Befestigungsmittel (35) an einer Scheibe (45) des Stapels (10) von Abscheidungsscheiben angebracht sind oder einen Teil davon bilden.

7. Zentrifugalabscheider (1) nach Anspruch 6, wobei die Befestigungsmittel (35) als Durchgangslöcher in einem Randabschnitt (46) einer Scheibe (45) des Stapels (10) von Abscheidungsscheiben ausgebildet sind.

8. Zentrifugalabscheider (1) nach Anspruch 6, wobei die Befestigungsmittel (35) als einzelne Befestigungselemente (35a) für mindestens eine, wie z.B. alle, der Vielzahl von Auslassleitungen (30) ausgebildet sind.

9. Zentrifugalabscheider (1) nach Anspruch 8, wobei die einzelnen Befestigungselemente (35a) als Schlaufen ausgebildet sind, die am Außenumfang einer Scheibe (45) des Stapels (10) von Abscheidungsscheiben (40) angebracht sind.

10. Zentrifugalabscheider (1) nach Anspruch 9, wobei die Abscheidungsscheiben (40) kegelstumpfförmige Abscheidungsscheiben sind, und wobei die einzelnen Befestigungselemente (35a) eine axiale Dicke aufweist, die größer ist als die Dicke des konischen Abschnitts der kegelstumpfförmigen Abscheidungsscheiben (40).

11. Zentrifugalabscheider (1) nach einem vorhergehenden Anspruch, der ferner Schlammauslässe (15) am Umfang der Zentrifugentrommel (5) umfasst.

12. Zentrifugalabscheider (1) nach Anspruch 11, wobei die Schlammauslässe (15) in Form eines Satzes von intermittierend zu öffnenden Auslässen vorliegen.

13. Zentrifugalabscheider (1) nach einem vorhergehenden Anspruch, der ferner ein Leichtphasenauslassrohr (7a) zum Ablassen einer abgeschiedenen flüssigen leichten Phase umfasst.

14. Verfahren (100) zum Abscheiden mindestens einer flüssigen schweren Phase aus einem flüssigen Zulaufgemisch, das die folgenden Schritte umfasst:
a) Einleiten (101) des flüssigen Zulaufgemischs in einen Zentrifugalabscheider (1) nach einem der Ansprüche 1 bis 13; und
b) Ablassen (102) einer abgeschiedenen flüssigen schweren Phase aus dem Zentrifugalabscheider (1).

15. Verfahren (100) nach Anspruch 14, wobei das flüssige Zulaufgemisch Hefen umfasst, die in der abgelassenen flüssigen schweren Phase abgelassen werden.

## Revendications

1. Séparateur centrifuge (1) pour séparer au moins une phase lourde liquide d'un mélange d'alimentation liquide, comprenant
un bâti (2), un élément d'entraînement (3) et une partie rotative (4),
dans lequel l'élément d'entraînement (3) est configuré pour faire tourner la partie rotative (4) par rapport au bâti (2) autour d'un axe de rotation (X), et
dans lequel la partie rotative (4) comprend un bol centrifuge (5) renfermant un espace de séparation (9a) et un espace de boues (9b) ;
dans lequel l'espace de séparation (9a) comprend une pile (10) de disques de séparation (40) agencés de façon coaxiale autour de l'axe de rotation (X) et dans lequel ledit espace de boues (9b) est agencé de façon radiale à l'extérieur de ladite pile (10) de disques de séparation (40) ;
dans lequel le bol centrifuge (5) comprend en outre une entrée (14) pour recevoir le mélange d'alimentation liquide et
une première chambre de sortie (6) en liaison fluidique avec un tuyau de sortie de phase lourde (6a) pour évacuer une phase lourde liquide séparée,
et dans lequel le séparateur centrifuge (1) comprend en outre
une pluralité de conduits de sortie (30) pour le transport de ladite phase lourde liquide séparée depuis ledit espace de boues (9b) vers ladite première chambre de sortie (6) ; et dans lequel les parties terminales d'entrée (31) de la pluralité de conduits de sortie (30) s'étendent dans ledit espace de boues (9b) et
**caractérisé en ce que**
le séparateur centrifuge (1) comprend en outre des éléments de fixation (35) pour fixer la position radiale des parties terminales d'entrée (31) dans l'espace de boues (9b) à distance de la paroi intérieure d'enceinte (13) du bol centrifuge (5).

2. Séparateur centrifuge (1) selon la revendication 1, dans lequel la pluralité de conduits de sortie (30) sont formés sous forme de tuyaux au niveau de leurs parties terminales d'entrée (31).

3. Séparateur centrifuge (1) selon la revendication 1 ou 2, dans lequel l'espace de boues (9b) a une distance radiale de R_{sludge}, et la pluralité de conduits de sortie (30) sont agencés de sorte que les parties terminales d'entrée (31) sont agencées en une position radiale par rapport à la paroi intérieure d'enceinte du bol centrifuge comprise entre 0,2 et 0,8 R_{sludge}.

4. Séparateur centrifuge (1) selon l'une quelconque des revendications précédentes, dans lequel lesdits moyens de fixation (35) sont attachés à la paroi intérieure d'enceinte (13) du bol centrifuge (5) dans l'espace de boues (9b).

5. Séparateur centrifuge (1) selon la revendication 4, dans lequel ledit moyen de fixation (35) comprend des éléments de fixation individuels pour au moins un, tel que l'ensemble, de ladite pluralité de conduits de sortie (30).

6. Séparateur centrifuge (1) selon l'une quelconque des revendications 1 à 3, dans lequel les moyens de fixation (35) sont attachés à un disque (45) de la pile (10) de disques de séparation ou en font partie.

7. Séparateur centrifuge (1) selon la revendication 6, dans lequel les moyens de fixation (35) sont formés sous forme d'orifices de passage dans une partie de bord (46) d'un disque (45) de la pile (10) de disques de séparation.

8. Séparateur centrifuge (1) selon la revendication 6, dans lequel les moyens de fixation (35) sont formés sous forme d'éléments de fixation individuels (35a) pour au moins un, tel que l'ensemble, de la pluralité de conduits de sortie (30).

9. Séparateur centrifuge (1) selon la revendication 8, dans lequel les éléments de fixation individuels (35a) sont formés sous forme boucles attachées à la circonférence extérieure d'un disque (45) de la pile (10) de disques de séparation (40).

10. Séparateur centrifuge (1) selon la revendication 9, dans lequel les disques de séparation (40) sont des disques de séparation tronconiques et dans lequel les éléments de fixation individuels (35a) a une épaisseur axiale supérieure à l'épaisseur de la partie conique des disques de séparation tronconiques (40).

11. Séparateur centrifuge (1) selon l'une quelconque des revendications précédentes, comprenant en outre des sorties de boues (15) à la périphérie du bol centrifuge (5).

12. Séparateur centrifuge (1) selon la revendication 11, dans lequel les sorties de boues (15) sont sous la forme d'un ensemble de sorties à ouverture intermittente.

13. Séparateur centrifuge (1) selon l'une quelconque des revendications précédentes, comprenant en outre un tuyau de sortie de phase légère (7a) pour évacuer une phase légère liquide séparée.

14. Procédé (100) de séparation d'au moins une phase lourde liquide d'un mélange d'alimentation liquide, comprenant les étapes consistant à :
a) introduire (101) le mélange d'alimentation liquide dans un séparateur centrifuge (1) selon l'une quelconque des revendications 1 à 13 ; et
b) évacuer (102) une phase lourde liquide séparée dudit séparateur centrifuge (1).

15. Procédé (100) selon la revendication 14, dans lequel le mélange d'alimentation liquide comprend des levures qui sont évacuées dans la phase lourde liquide évacuée.
